# EUROPEAN PATENT APPLICATION

(11) **EP 4 692 782 A1**
(43) Date of publication of application: **11.02.2026**
(21) Application number: 24780668.0
(22) Date of filing: 28.03.2024
(51) Int. Cl.: G01N 29/265, B25J 15/04, B25J 17/02, G01N 29/22

(54) **END EFFECTOR, FLAW DETECTION SYSTEM, AND METHOD FOR INSPECTING INSPECTION TARGET**

(30) Priority: 31.03.2023 JP 2023056992
(71) Applicant: Mitsubishi Heavy Industries, Ltd., Tokyo 100-8332 (JP)
(72) Inventor: MATSUMOTO Takayuki, Tokyo 100-8332 (JP); ISHIDA Makoto, Tokyo 100-8332 (JP)
(74) Representative: Hoffmann Eitle
(86) International application number: PCT/JP2024/012707
(87) International publication number: WO 2024/204568

(57) **Abstract**

A robot arm (40) is provided with an end effector (70) that grips a probe so as to bring the probe (50) into contact with an inspection target. The end effector includes an elastic member that is compressed by a force applied to the probe from the inspection target, thereby allowing the probe to be displaced in the direction of the compression.

## Description

### Technical Field

The present disclosure relates to an end effector, a flaw detection system, and a method for inspecting an inspection target.

### Background Art

For example, PTL 1 below describes a robot arm that grips an ultrasonic sensor. According to the robot arm, an inspection target can be inspected by using a reflected wave of an ultrasonic wave transmitted from the ultrasonic sensor while pressing the ultrasonic sensor against the inspection target.

### Citation List

### Patent Literature

[PTL 1] Japanese Patent No. 5495562

### Summary of Invention

### Technical Problem

In a state where the shape or position of the inspection target is not accurately grasped, or the like, there is a possibility that the ultrasonic sensor may be excessively strongly pressed against the inspection target.

### Solution to Problem

One aspect of the present disclosure provides an end effector. The end effector grips a probe to bring the probe into contact with an inspection target. The end effector includes an elastic member that allows displacement of the probe by being compressed by a force that is applied from the inspection target to the probe.

### Brief Description of Drawings

Fig. 1 is a diagram showing a configuration of an inspection system according to a first embodiment.
Fig. 2 is a perspective view showing a configuration of a probe according to the embodiment.
Fig. 3 is an enlarged view of an end effector of a robot arm according to the embodiment.
Fig. 4 is a diagram showing an operation of the end effector of the robot arm according to the embodiment.
Fig. 5 is an enlarged view of the end effector of the robot arm according to the embodiment.
Fig. 6 is a diagram showing an operation of the end effector of the robot arm according to the embodiment.
Fig. 7 is a flowchart showing a pre-adjustment step of the end effector according to the embodiment.
Fig. 8 is a flowchart showing an inspection step according to the embodiment.
Fig. 9 is an enlarged view of an end effector of a robot arm according to a second embodiment.
Fig. 10 is a diagram showing a method for adjusting a spring multiplier according to the embodiment.
Fig. 11 is a flowchart showing a pre-adjustment step of the end effector according to the embodiment.
Fig. 12 is a flowchart showing an inspection step according to the embodiment.
Fig. 13 is an enlarged view of an end effector of a robot arm according to a modification example of the above-described embodiment.
Fig. 14 is a diagram showing an operation of the end effector of the robot arm according to the modification example.

### Description of Embodiments

### <First Embodiment>

Hereinafter, a first embodiment will be described with reference to the drawings.

### [System Configuration]

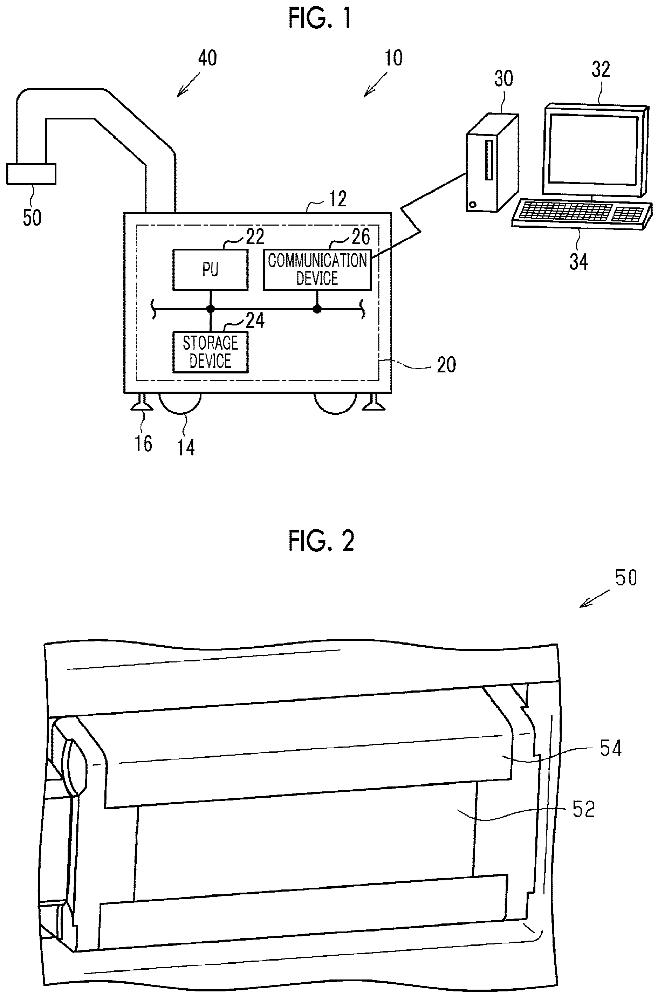

Fig. 1 shows a configuration of a flaw detection system.

The flaw detection system is a system that inspects an inspection target in accordance with a reflected wave of an ultrasonic wave transmitted from a probe while pressing the probe against the inspection target. The inspection of the inspection target is for the purpose of determining the presence or absence of abnormality in the inspection target. Specifically, in a case where the inspection target is a composite material, the inspection of the inspection target may be inspection of the presence or absence or the like of delamination, non-adhesion, bubbles, or foreign substances inside the composite material.

The flaw detection system includes a flaw detection device 10. The flaw detection device 10 includes a robot arm 40 provided on a cart 12, and a probe 50. The cart 12 includes wheels 14. In addition, the cart 12 is provided with a stopper 16. Therefore, after the cart is moved to a predetermined position, the cart 12 can be fixed so as not to move.

A control device 20 is provided on the cart 12. The control device 20 controls the flaw detection device 10 as a control target. The control device 20 includes a PU 22, a storage device 24, and a communication device 26. The PU 22 is a software processing unit including at least one of a CPU, a GPU, a TPU, and the like. The control device 20 controls a control target by the PU 22 executing a program stored in the storage device 24.

The communication device 26 is capable of communicating with an external terminal 30. The terminal 30 may be disposed at a position away from the inspection target. The terminal 30 operates a display device 32 as a user interface. In addition, the terminal 30 receives an input from an input device 34 as a user interface.

Fig. 2 shows the probe 50. The probe 50 includes a sensing unit 52 and a frame member 54. The sensing unit 52 is accommodated in the frame member 54. The sensing unit 52 includes a member that transmits ultrasonic waves and a member that detects a reflected wave of the transmitted ultrasonic wave. In addition, the sensing unit 52 may include a protective film or the like.

### [Configuration of End Effector]

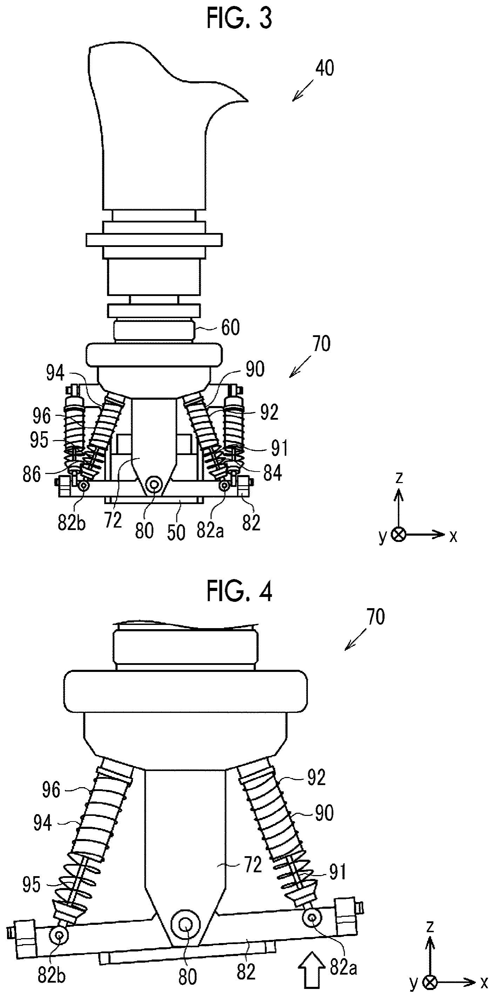

Fig. 3 shows a configuration of an end effector 70 that grips the probe 50 of the robot arm 40.

The end effector 70 is attached to an arm portion of the robot arm 40 by a tool changer 60. As the end effector 70, there are a plurality of types according to the shapes of the probe to be gripped and the inspection target. The tool changer 60 is a member for changing the end effector 70 that is provided in the robot arm 40.

**In** Fig. 3, a direction from the probe 50 to the tool changer 60 is set as a positive direction of a z-axis.

The end effector 70 includes a base member 72. The base member 72 is a member that extends from the tool changer 60 side toward the probe side. A longitudinal side rotating member 82 is attached to an end portion of the base member 72 on the probe 50 side so as to be rotatable around a longitudinal-side axis of rotation 80. The longitudinal side rotating member 82 is a member that extends by the same length to both sides from the longitudinal-side axis of rotation 80. An x-axis direction in Fig. 3 in which the longitudinal side rotating member 82 extends is parallel to a longitudinal direction of the probe 50.

A fixing portion 82a is provided at one end portion of the longitudinal side rotating member 82. The fixing portion 82a fixes a piston rod 91 to the longitudinal side rotating member 82. An end portion of the piston rod 91 on a side not fixed to the longitudinal side rotating member 82, out of a pair of end portions of the piston rod 91, is accommodated in a cylinder 90. An end portion of the cylinder 90 on a side opposite to a side where the piston rod 91 is inserted, out of a pair of end portions of the cylinder 90, is fixed to the base member 72. In addition, a first coil spring 92 is provided around the cylinder 90 and the piston rod 91. The first coil spring 92 is disposed between the longitudinal side rotating member 82 and an end portion of the cylinder 90 on the base member 72 side.

A fixing portion 82b is provided at the other end portion of the longitudinal side rotating member 82. The fixing portion 82b fixes a piston rod 95 to the longitudinal side rotating member 82. An end portion of the piston rod 95 on a side not fixed to the longitudinal side rotating member 82, out of a pair of end portions of the piston rod 95, is accommodated in a cylinder 94. An end portion of the cylinder 94 on a side opposite to a side where the piston rod 95 is inserted, out of a pair of end portions of the cylinder 94, is fixed to the base member 72. In addition, a second coil spring 96 is provided around the cylinder 94 and the piston rod 95. The second coil spring 96 is disposed between the longitudinal side rotating member 82 and an end portion of the cylinder 94 on the base member 72 side.

The distance between the first coil spring 92 and the second coil spring 96 decreases as the distance from the longitudinal side rotating member 82 increases. That is, the distance in the x-axis direction between the first coil spring 92 and the second coil spring 96 decreases toward an upper side in the z-axis direction.

The first coil spring 92 and the second coil spring 96 apply an elastic force to the longitudinal side rotating member 82 when the longitudinal side rotating member 82 rotates with the longitudinal-side axis of rotation 80 as a rotation center.

Fig. 4 illustrates a case where a bias occurs in the force that is applied to the longitudinal side rotating member 82. The example shown in Fig. 4 shows a case where the force that is applied to the fixing portion 82a side is larger than the force that is applied to the fixing portion 82b side.

In this case, the first coil spring 92 is compressed while the second coil spring 96 is expanded. In this way, the amount of the piston rod 91 inserted into the cylinder 90 increases, while the amount of the piston rod 95 inserted into the cylinder 94 decreases. In this way, the longitudinal side rotating member 82 rotationally displaces counterclockwise as shown in Fig. 4.

Fig. 3 shows a state where there is no bias in the force that is applied to the longitudinal side rotating member 82. In that case, the longitudinal side rotating member 82 extends along the x-axis direction.

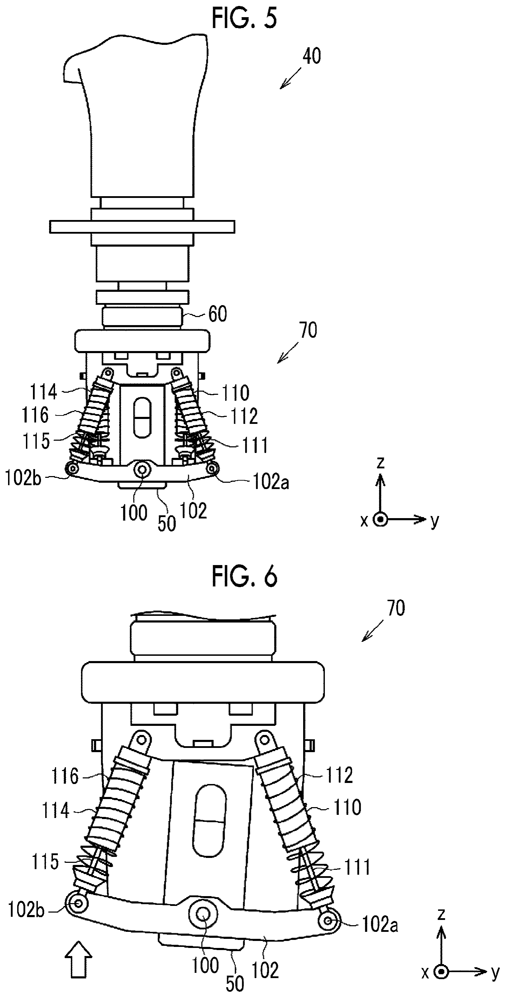

Fig. 5 is a side view of the end effector 70 as viewed from the x-axis direction.

A short side rotating member 102 shown in Fig. 5 is fixed to the longitudinal side rotating member 82. The short side rotating member 102 is attached to be rotatable around a short-side axis of rotation 100. The short side rotating member 102 is a member that extends by the same length to both sides from the short-side axis of rotation 100. The probe 50 is fixed to the short side rotating member 102. Specifically, the frame member 54 is fixed to the short side rotating member 102.

A fixing portion 102a is provided at one end portion of the short side rotating member 102. The fixing portion 102a fixes a piston rod 111 to the short side rotating member 102. An end portion of the piston rod 111 on a side not fixed to the short side rotating member 102, out of a pair of end portions of the piston rod 111, is accommodated in a cylinder 110. An end portion of the cylinder 110 on a side opposite to a side where the piston rod 111 is inserted, out of a pair of end portions of the cylinder 110, is fixed to the base member 72. In addition, a third coil spring 112 is provided around the cylinder 110 and the piston rod 111. The third coil spring 112 is disposed between the short side rotating member 102 and an end portion of the cylinder 110 on the base member 72 side.

A fixing portion 102b is provided at the other end portion of the short side rotating member 102. The fixing portion 102b fixes a piston rod 115 to the short side rotating member 102. An end portion of the piston rod 115 on a side not fixed to the short side rotating member 102, out of a pair of end portions of the piston rod 115, is accommodated in a cylinder 114. An end portion of the cylinder 114 on a side opposite to a side where the piston rod 115 is inserted, out of a pair of end portions of the cylinder 114, is fixed to the base member 72. In addition, a fourth coil spring 116 is provided around the cylinder 114 and the piston rod 115. The fourth coil spring 116 is disposed between the short side rotating member 102 and an end portion of the cylinder 114 on the base member 72 side.

The distance between the third coil spring 112 and the fourth coil spring 116 decreases as the distance from the short side rotating member 102 increases. That is, the distance in a y-axis direction between the third coil spring 112 and the fourth coil spring 116 decreases toward the upper side in the z-axis direction.

The third coil spring 112 and the fourth coil spring 116 apply an elastic force to the short side rotating member 102 when the short side rotating member 102 rotates with the short-side axis of rotation 100 as a rotation center.

Fig. 6 illustrates a case where a bias occurs in a force that is applied to the short side rotating member 102. The example shown in Fig. 6 shows a case where the force that is applied to the fixing portion 102b side is larger than the force that is applied to the fixing portion 102a side.

In this case, the fourth coil spring 116 is compressed while the third coil spring 112 is expanded. In this way, the amount of the piston rod 115 inserted into the cylinder 114 increases, while the amount of the piston rod 111 inserted into the cylinder 110 decreases. In this way, the short side rotating member 102 rotationally displaces clockwise shown in Fig. 6.

Fig. 5 shows a state where there is no bias in the force that is applied to the short side rotating member 102. In that case, the short side rotating member 102 extends along the y-axis direction.

### [Pre-adjustment Step]

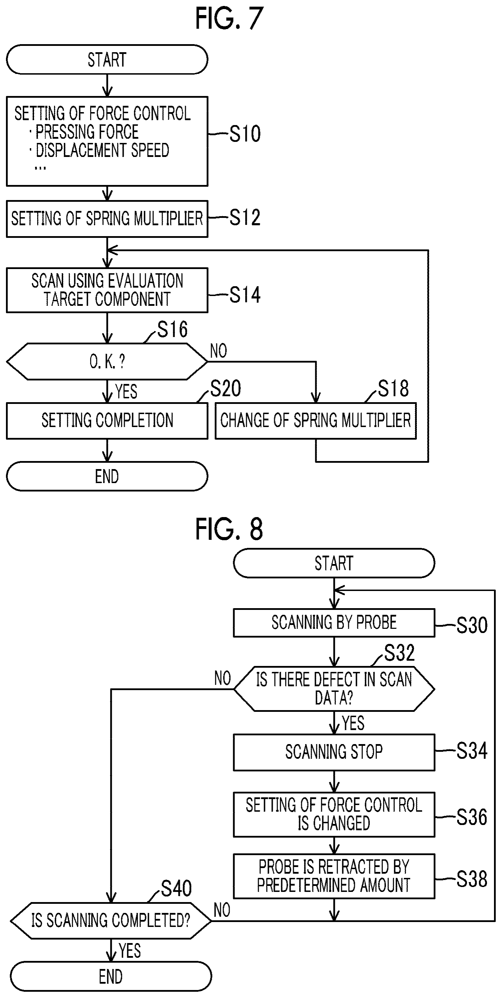

Fig. 7 shows a procedure of adjustment that is performed prior to the inspection of the inspection target by the probe 50. In the following, a step number of each step is expressed by a number with "S" added to the beginning.

In a series of steps shown in Fig. 7, first, a pressing force, which is a force of pressing the probe 50 against the inspection target, a displacement speed, which is a speed for displacing the probe 50 along the inspection target, and the like are set (S10). In this step, first, the pressing force, the displacement speed, and the like are input to the terminal 30 via the input device 34, and thus the parameters related to the operation of the robot arm 40 are set in the terminal 30. Then, the set parameters are transmitted from the terminal 30 to the control device 20.

Next, a spring multiplier of the end effector 70 is set (S12). This processing is a step of adopting specific coil springs as the first coil spring 92, the second coil spring 96, the third coil spring 112, and the fourth coil spring 116. Here, a coil spring having the smallest spring multiplier among the coil springs that can be prepared is adopted. The spring multiplier of the first coil spring 92 and the spring multiplier of the second coil spring 96 may be the same. In addition, the spring multiplier of the third coil spring 112 and the spring multiplier of the fourth coil spring 116 may be the same.

Next, the control device 20 operates the robot arm 40 to press the probe 50 against the surface of an evaluation target component and to displace the probe 50 along a predetermined path on the surface (S14). At this time, whether or not the probe 50 is appropriately displaced on the predetermined path is visually checked.

Then, in a case where as a result of the confirmation by a person, it is determined that the probe 50 is not successfully controlled (S16: NO), the spring multiplier is changed (S18). This step is a step in which at least one of the first coil spring 92, the second coil spring 96, the third coil spring 112, and the fourth coil spring 116 is changed to a coil spring having a larger spring multiplier.

That is, in a case where the spring multiplier is excessively small, the detection value of a force sensor provided in the end effector 70 becomes excessively small, and thus it may be difficult to displace the probe 50 while appropriately pressing the probe 50 against the evaluation target component. On the other hand, in a case where the spring multiplier is excessively large, there is a concern that an excessive force may be applied to the probe 50. In the present embodiment, a coil spring is gradually changed to the coil spring having a larger spring multiplier, so that an optimal spring multiplier is grasped. In a case where the step of S18 is completed, the processing returns to S14.

In contrast, in a case where as a result of the confirmation by a person, it is determined that the probe 50 can be successfully controlled (S16: YES), the spring multiplier is determined (S20). That is, the spring multipliers of the first coil spring 92, the second coil spring 96, the third coil spring 112, and the fourth coil spring 116 that are used at that point in time are adopted. In this way, in a case where a level of a force applied to the probe 50 is appropriate for the force control, the compression and the expansion of the adopted coil spring are sufficiently suppressed. That is, for example, even when there is a bias in the forces that are applied to both ends of the longitudinal side rotating member 82, in a case where the bias is small, the difference between the length of the first coil spring 92 and the length of the second coil spring 96 can be ignored. In addition, for example, even when there is a bias in the forces that are applied to both ends of the short side rotating member 102, in a case where the bias is small, the difference between the length of the third coil spring 112 and the length of the fourth coil spring 116 can be ignored.

In a case where the step of S20 is completed, a series of steps shown in Fig. 7 is ended.

### [Inspection Step]

Fig. 8 shows a procedure of a step of inspecting the inspection target.

In a series of steps shown in Fig. 8, the PU 22 of the control device 20 displaces the probe 50 along a predetermined path on the surface of the inspection target while pressing the probe 50 against the inspection target by operating the robot arm 40 (S30). In other words, the PU 22 causes the probe 50 to scan the surface of the inspection target. Here, the force control set by the processing in Fig. 7 is used in the processing of pressing the probe 50 against the inspection target. The PU 22 determines whether or not there is a defect in the scan data inside the inspection target caused by a reflected wave of an ultrasonic wave transmitted by the probe 50 (S32). In a case where it is determined that the defect occurs (S32: YES), the PU 22 stops the scanning of the probe 50 (S34).

In that case, the setting of the force control by the processing in Fig. 7 is changed (S36). That is, for example, the terminal 30 changes at least one of the pressing force and the displacement speed. Then, the terminal 30 transmits the changed value to the control device 20. The control device 20 updates the storage content of the storage device 24 with the changed value.

Then, the control device 20 displaces the probe 50 to a position retracted by a predetermined amount on a path followed by the probe 50 before the scanning is stopped (S38). Then, the PU 22 returns to the processing in S30.

On the other hand, in a case where the negative determination is made in the processing in S32, the PU 22 determines whether or not the scanning is completed (S40). This processing is processing of determining whether or not the probe 50 has traced all of the paths set in advance for the inspection of the inspection target. In a case where it is determined that the scanning is not yet completed (S40: NO), the PU 22 returns to the processing in S30.

On the other hand, in a case where it is determined that the scanning is completed (S40: YES), the PU 22 temporarily ends a series of steps shown in Fig. 8.

### [Operation and Effects of Present Embodiment]

In the end effector 70, the probe 50 is fixed to the longitudinal side rotating member 82 and the short side rotating member 102. Therefore, the probe 50 is rotatable with the longitudinal-side axis of rotation 80 as a rotation center. In addition, the probe 50 is rotatable with the short-side axis of rotation 100 as a rotation center.

When a large bias occurs in the forces that are applied to both sides of the longitudinal side rotating member 82 with respect to the longitudinal-side axis of rotation 80, the longitudinal side rotating member 82 rotates against the elastic forces of the first coil spring 92 and the second coil spring 96. In this way, the probe 50 is displaced together with the longitudinal side rotating member 82. Therefore, it is possible to suppress the application of an excessively large force to the probe 50.

When a large bias occurs in the forces that are applied to both sides of the short side rotating member 102 with respect to the short-side axis of rotation 100, the short side rotating member 102 rotates against the elastic forces of the third coil spring 112 and the fourth coil spring 116. In this way, the probe 50 is displaced together with the short side rotating member 102. Therefore, it is possible to suppress the application of an excessively large force to the probe 50.

Therefore, even when the probe 50 is pressed against the inspection target with an excessively large force by control of the robot arm 40 due to the tolerance or the like of the inspection target, an excessively large force is prevented from being applied to the probe 50.

### <Second Embodiment>

Hereinafter, a second embodiment will be described with reference to the drawings with a focus on differences from the first embodiment.

In the present embodiment, the end effector 70 is provided with a device that automatically adjusts the elastic forces of the first coil spring 92, the second coil spring 96, the third coil spring 112, and the fourth coil spring 116. In other words, an active type end effector 70 is adopted instead of the passive type end effector 70 according to the first embodiment.

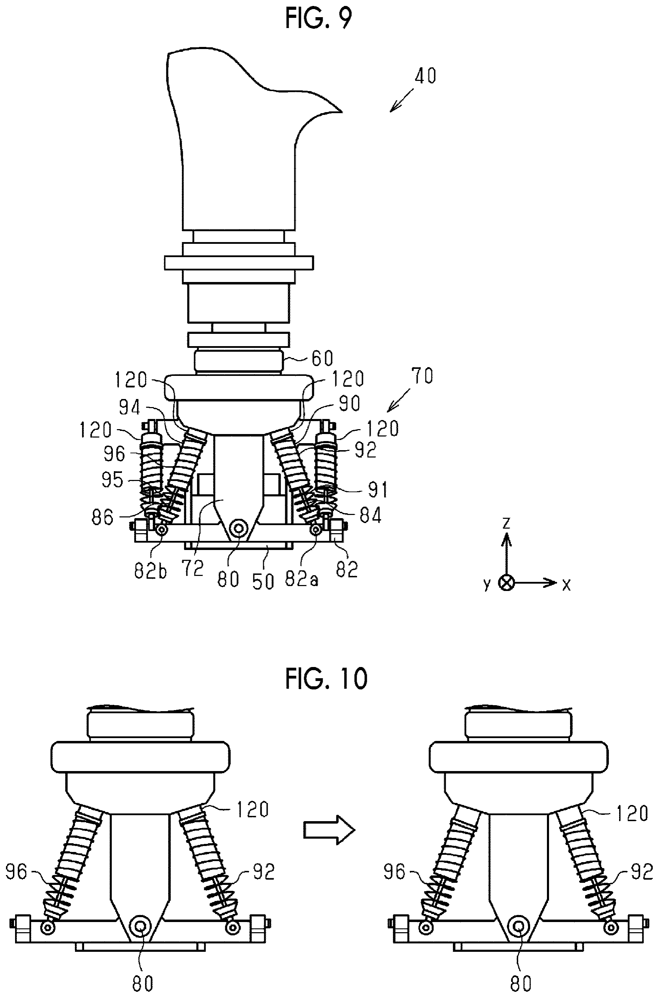

Fig. 9 shows a configuration of the end effector 70 according to the present embodiment. Fig. 9 is a view of the end effector 70 as seen from a side surface of the longitudinal side rotating member 82, as in Fig. 3.

As shown in Fig. 9, in the present embodiment, one end portion of each of the first coil spring 92, the second coil spring 96, the third coil spring 112, and the fourth coil spring 116 is fixed to an adjustment device 120. The adjustment device 120 is a device that can be displaced in a length direction of each of the first coil spring 92, the second coil spring 96, the third coil spring 112, and the fourth coil spring 116. This can be realized, for example, by having a structure of a screw that engages with the outer peripheral surface of each of the cylinders 90, 94, 110, and 114. Specifically, the adjustment device 120 includes, for example, a wheel motor or the like, and is displaceable while rotating in accordance with a screw structure. The displacement amount of the adjustment device 120 is controlled by the PU 22.

The left side of Fig. 10 shows a state where the lengths of the first coil spring 92 and the second coil spring 96 are maximized. On the other hand, the right side of Fig. 10 shows a state where the length of the first coil spring 92 is shortened by displacing the adjustment device 120 to the fixing portion 82a side. In addition, the right side of Fig. 10 shows a state where the length of the second coil spring 96 is shortened by displacing the adjustment device 120 to the fixing portion 82b side.

In the state on the right side in Fig. 10, the lengths of the first coil spring 92 and the second coil spring 96 when no force is applied to the longitudinal side rotating member 82 become shorter than those in the state on the left side. In other words, the lengths of the first coil spring 92 and the second coil spring 96 are shortened in a case where the length of the first coil spring 92 and the length of the second coil spring 96 are equal to each other. In that case, compared to the state on the left side in Fig. 10, when the length of the first coil spring 92 is shorter than the length of the second coil spring 96 by a predetermined amount, the elastic force for pushing back the longitudinal side rotating member 82 increases.

### [Pre-adjustment Step]

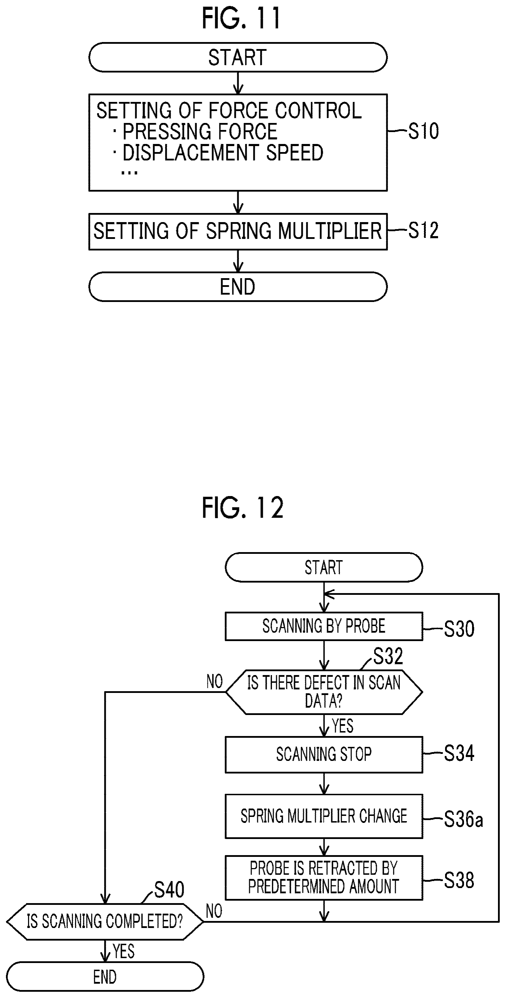

Fig. 11 illustrates a procedure of a pre-adjustment step according to the present embodiment. In Fig. 11, for convenience, the same step number is assigned to the steps corresponding to the steps shown in Fig. 7.

A series of steps shown in Fig. 11 includes the steps of S10 and S12. The step of S12 includes a step of causing the PU 22 to make the length of the first coil spring 92 and the length of the second coil spring 96 maximum in a case where the lengths of the first coil spring 92 and the second coil spring 96 are equal to each other. That is, a step of causing the PU 22 to displace the adjustment device 120 to the maximum extent toward a side opposite to the fixing portions 82a and 82b is included. In addition, the step of S12 includes a step of causing the PU 22 to make the length of the third coil spring 112 and the length of the fourth coil spring 116 maximum in a case where the lengths of the third coil spring 112 and the fourth coil spring 116 are equal to each other. That is, a step of causing the PU 22 to displace the adjustment device 120 to the maximum extent toward a side opposite to the fixing portions 102a and 102b is included.

### [Inspection Step]

Fig. 12 shows a procedure of an inspection step. In Fig. 12, for convenience, the same step number is assigned to the step corresponding to the step shown in Fig. 8.

In a series of steps shown in Fig. 12, after the processing in S34, the spring multiplier is changed by the PU 22 operating the adjustment device 120 (S36a). Here, the spring multiplier of at least one coil spring of the four coil springs including the first coil spring 92, the second coil spring 96, the third coil spring 112, and the fourth coil spring 116 is changed. It is desirable that the spring multiplier of the first coil spring 92 and the spring multiplier of the second coil spring 96 are changed to be the same spring multiplier at the same time. In addition, it is desirable that the spring multiplier of the third coil spring 112 and the spring multiplier of the fourth coil spring 116 are changed to be the same spring multiplier at the same time.

When the spring multiplier is changed, the process transitions to the step of S38.

In this way, according to the present embodiment, the adjustment device 120 is provided, so that the spring multiplier can be changed under automatic control by the PU 22. Therefore, the spring multiplier can be changed in the inspection step.

### <Correspondence Relationship>

The correspondence relationship between the items in the above-described embodiments and the items described in the following "Additional Remark" section is as follows. In the following, a correspondence relationship is shown for each number of the solutions described in the "Additional Remark" section.
[1, 4] The elastic member corresponds to each of the first coil spring 92, the second coil spring 96, the third coil spring 112, and the fourth coil spring 116.
[2] The first elastic member, the second elastic member, and the rotating member correspond to the first coil spring 92, the second coil spring 96, and the longitudinal side rotating member 82, respectively. In addition, the first elastic member, the second elastic member, and the rotating member correspond to the third coil spring 112, the fourth coil spring 116, and the short side rotating member 102, respectively.
[3] The first elastic member, the second elastic member, and the first rotating member correspond to the first coil spring 92, the second coil spring 96, and the longitudinal side rotating member 82, respectively. The second elastic member, the third elastic member, and the second rotating member correspond to the third coil spring 112, the fourth coil spring 116, and the short side rotating member 102, respectively.
[5] The adjustment device corresponds to the adjustment device 120.
[6] The flaw detection system corresponds to the flaw detection device 10 and the control device 20. The processing that is executed by the control device 20 corresponds to the processing in S30.
[7] The inspection step corresponds to the step of executing the processing in S30. The changing step corresponds to the step of S36. The step to be resumed corresponds to the processing in S38 and S30.
[8] The inspection step corresponds to the step of S30. The changing step corresponds to the step of S36a. The step to be resumed corresponds to the steps of S38 and S30.

### <Other Embodiments>

The present embodiment can be modified and implemented as follows. The present embodiment and the following modification examples can be implemented by being combined with each other within a range that is not technically contradictory.

### [Regarding Elastic Member]

· It is not essential that the distance between the first coil spring 92 and the second coil spring 96 decreases as the distance from the longitudinal side rotating member 82 increases.
· It is not essential that the distance between the third coil spring 112 and the fourth coil spring 116 decreases as the distance from the short side rotating member 102 increases.
· The spring is not limited to a coil spring. In addition, the spring is not limited to a member in which a spring multiplier can be defined. For example, the spring may be a member such as an air spring in which an elastic force with respect to an applied force has nonlinearity.
· It is not essential that the elastic member is a spring.
· It is not essential that the elastic member is configured to apply a force against the rotation of the rotating member around the rotation axis. For example, the base member 72 may be configured to apply a force against the displacement of the base member 72 toward the tool changer 60 side.

### [Regarding Second Rotating Member]

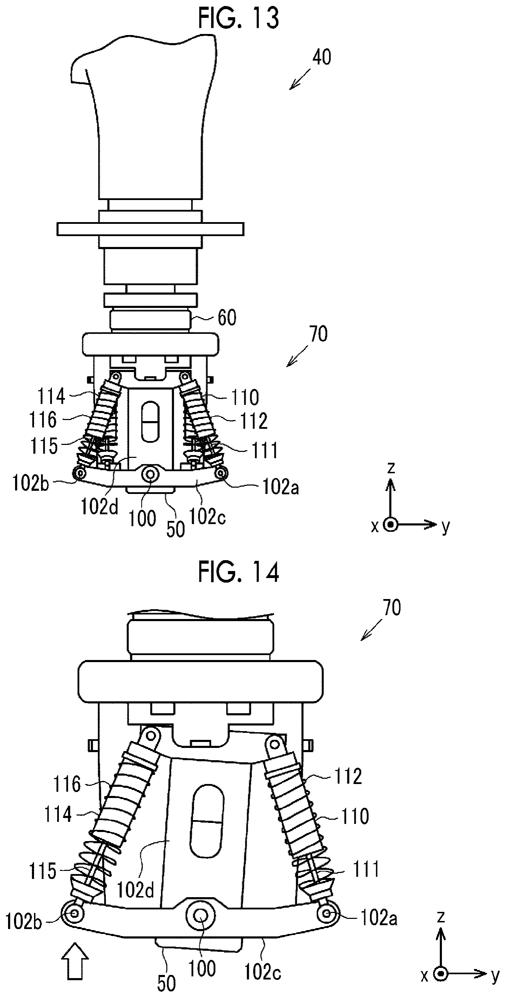

· The second rotating member configured to be rotatable integrally with the probe around an axis of rotation orthogonal to the axis of rotation of the first rotating member is not limited to the short side rotating member 102 described in the above embodiment. For example, a short side rotating member 102d shown in Fig. 13 may be used. In Fig. 13, a short side frame member 102c is formed integrally with the longitudinal side rotating member 82. The short side frame member 102c does not rotate around the short-side axis of rotation 100. Instead, the short side rotating member 102d rotates around the short-side axis of rotation 100. Then, the probe 50 is fixed to the short side rotating member 102d. Specifically, the frame member 54 is fixed to the short side rotating member 102d.

Fig. 14 illustrates a case where a bias occurs in the force that is applied to the probe 50. The example shown in Fig. 14 shows a case where the force that is applied to the left side of the probe 50 in Fig. 14 is larger than the force that is applied to the right side.

In this case, the third coil spring 112 is compressed while the fourth coil spring 116 is expanded. In this way, the amount of the piston rod 111 inserted into the cylinder 110 increases, while the amount of the piston rod 115 inserted into the cylinder 114 decreases. In this way, the short side rotating member 102d rotationally displaces clockwise shown in Fig. 14.

### [Regarding Passive Type End Effector]

· In the adjustment device 120 illustrated in Fig. 9, a configuration in which the adjustment device 120 is automatically displaced by a motor is illustrated. However, the adjustment device 120 may be a device that is manually displaced. In this case, the end effector adopts a passive type. Therefore, the processing in Figs. 7 and 8 may be applied.

### [Regarding Adjustment Device]

· The adjustment device is not limited to a device that adjusts the length of the coil spring in a state where no force is applied to the probe 50. For example, as described in the section [Regarding Elastic Member] described above, in a case where the elastic member is an air spring, the adjustment device may be a device that adjusts the air amount filled in the air spring. Even in this case, the PU 22 controls the air amount, so that the processing in accordance with the processing illustrated in Figs. 11 and 12 can be realized. Since the elastic force of an air spring is not generally proportional to the displacement amount, a spring multiplier cannot be defined. Therefore, the processing in S36a of Fig. 12 is to be read as a change in the filled air amount instead of a change in the spring multiplier.

### [Regarding Axis of Rotation of End Effector 70]

· It is not essential that the two axes of rotation orthogonal to each other are an axis of rotation parallel to the longitudinal direction of the probe 50 and an axis of rotation parallel to the short direction of the probe 50. For example, the two axes of rotation do not need to be parallel to either the longitudinal direction of the probe 50 or the short direction of the probe 50.
· The shaft for rotating the probe 50 is not limited to the two axes of rotation orthogonal to each other. For example, the two axes of rotation may be axes of rotation having an angle formed therebetween that is smaller than 90°.
· It is not essential that the shafts for rotating the probe 50 are two axes of rotation that are different from each other. For example, only one axis of rotation may be provided. That is, for example, while the first coil spring 92, the second coil spring 96, and the longitudinal side rotating member 82 are provided, the third coil spring 112, the fourth coil spring 116, and the short side rotating member 102 do not need to be provided. Further, for example, while the third coil spring 112, the fourth coil spring 116, and the short side rotating member 102 are provided, the first coil spring 92, the second coil spring 96, and the longitudinal side rotating member 82 do not need to be provided.

### [Regarding Probe]

· In the above embodiments, the probe used for a reflection method has been exemplified. However, the present disclosure is not limited thereto. For example, a probe used in a transmission method may be used. In that case, each processing described above may be executed by each of a probe that transmits ultrasonic waves and a probe that receives the ultrasonic waves transmitted through the inspection target. This can be realized by providing a separate robot arm 40 and end effector 70 for each of the probe that transmits ultrasonic waves and the probe that receives ultrasonic waves transmitted through the inspection target. In this case, the processing in S30 is processing of linking the displacements of the two probes. Then, the processing in S36 may be processing of changing the setting of the force control relating to both of the two probes. However, the processing in S36 that is performed once may be processing of changing the setting for only one of the two probes. In addition, the processing in S36a may be processing of changing the spring multiplier for both of the two probes. However, the processing in S36a that is performed once may be processing of changing the spring multiplier for only one of the two probes.

### [Regarding Inspection Method]

. Fig. 8 shows an example in which in a case where the positive determination is made in the processing in S32, the setting of the force control is changed. However, the present disclosure is not limited thereto. For example, both the setting of the force control and the spring multiplier may be changed. Further, for example, although the spring multiplier may be changed, the setting of the force control does not need to be changed.
· Fig. 12 shows an example in which in a case where the positive determination is made in the processing in S32, the spring multiplier is changed. However, the present disclosure is not limited thereto. For example, both the setting of the force control and the spring multiplier may be changed. In addition, for example, the spring multiplier does not need to be changed even though the setting of the force control is changed.

### <Additional Remark>

Solution 1: An end effector that grips a probe to bring the probe into contact with an inspection target, the end effector including: an elastic member that allows displacement of the probe by being compressed by a force that is applied from the inspection target to the probe.

In the above configuration, the elastic member is provided. In this way, the elastic member is compressed before an excessively large force is applied to the probe, so that the force that is applied to the probe can be reduced. Therefore, it is possible to suppress the application of an excessively large force to the probe.

Solution 2: The end effector according to Solution 1, in which the elastic member includes a first elastic member and a second elastic member, the end effector further includes a rotating member, the rotating member is configured to be rotatable integrally with the probe around an axis of rotation, the first elastic member is configured to apply an elastic force to one of a pair of end portions of the rotating member that extends to both sides from the axis of rotation, and the second elastic member is configured to apply an elastic force to the other of the pair of end portions of the rotating member that extends to both sides from the axis of rotation.

In the above configuration, in a case where the forces that are applied to both sides of the rotating member with respect to the axis of rotation are different from each other, the bias can be absorbed by the rotation of the rotating member. Therefore, it is possible to suppress an excessively large force from being locally applied to the probe.

Solution 3: The end effector according to Solution 2, in which the rotating member is a first rotating member, the end effector further includes a second rotating member, the second rotating member is configured to be rotatable integrally with the probe around an axis of rotation orthogonal to an axis of rotation of the first rotating member, the elastic member includes a third elastic member and a fourth elastic member, the third elastic member is configured to apply an elastic force to one of a pair of end portions of the second rotating member that extends to both sides in a rotation direction with respect to the axis of rotation of the second rotating member, and the fourth elastic member is configured to apply an elastic force to the other of the pair of end portions of the second rotating member that extends to both sides in the rotation direction with respect to the axis of rotation of the second rotating member.

In the above configuration, in a case where the forces that are applied to both sides of the rotating member around the axis of rotation of the second rotating member are different from each other, the bias can be absorbed by the rotation of the second rotating member. In particular, since the first rotating member and the second rotating member whose axes of rotation are orthogonal to each other are provided, in a case where there is a bias in forces that are applied from various directions, the bias can be absorbed.

Solution 4: The end effector according to any one of Solutions 1 to 3, in which the elastic member is a spring.

Solution 5: The end effector according to any one of Solutions 1 to 4, further including: an adjustment device that adjusts an elastic force of the elastic member with respect to a compression amount of the elastic member.

In the above configuration, since the adjustment device is provided, the elastic force of the elastic member can be adjusted such that the force of pressing the probe against the inspection target is an appropriate force when the inspection target is inspected.

Solution 6: A flaw detection system including: the end effector according to any one of Solutions 1 to 5; a robot arm to which the end effector is attached; and a control device, in which the control device is configured to execute processing of displacing the probe along the inspection target by operating the robot arm while performing force control.

In the above configuration, in a case where the force of pressing the probe against the inspection target is too strong due to the force control, the end effector can reduce the force that is applied to the probe.

Solution 7: A method for inspecting an inspection target using the end effector according to any one of Solutions 1 to 6, in which the end effector is attached to a robot arm, the method including: a step of inspecting the inspection target by sampling a reflected wave of an ultrasonic wave transmitted while displacing the probe along the inspection target by operating the robot arm; a step of changing at least one of a force of pressing the probe against the inspection target by the robot arm and a displacement speed of the probe in a case where abnormality occurs in the sampling of the reflected wave; and a step of resuming the inspection from a point to which the probe is retracted by a predetermined amount with respect to a position of the probe before the abnormality occurs, after the change is made.

In a case where abnormality occurs in the above sampling, there is a possibility that the processing of displacing the probe while pressing the probe against the inspection target is not appropriate for inspection using the reflected wave. Therefore, in the above method, by changing at least one of the force of pressing the probe against the inspection target and the displacement speed of the probe, it is possible to perform adjustment such that the processing of displacing the probe while pressing the probe against the inspection target is appropriate for inspection using a reflected wave. Then, by resuming the inspection from a point to which the position of the probe is retracted by a predetermined amount after the change is made, it is possible to suppress the occurrence of a leak at an inspection location of the inspection target.

Solution 8: A method for inspecting an inspection target using the end effector according to Solution 5, in which the end effector is attached to a robot arm, the method including: a step of inspecting the inspection target by sampling a reflected wave of an ultrasonic wave transmitted while displacing the probe along the inspection target by operating the robot arm; a step of changing an elastic force of the elastic member in a case where abnormality occurs in the sampling of the reflected wave; and a step of resuming the inspection from a point to which the probe is retracted by a predetermined amount with respect to a position of the probe before the abnormality occurs, after the change is made.

In a case where abnormality occurs in the above sampling, there is a possibility that the processing of displacing the probe while pressing the probe against the inspection target is not appropriate for inspection using the reflected wave. Therefore, in the above method, by changing the elastic force, it is possible to perform adjustment such that the processing of displacing the probe while pressing the probe against the inspection target is appropriate for inspection using the reflected wave. Then, by resuming the inspection from a point to which the position of the probe is retracted by a predetermined amount after the change is made, it is possible to suppress the occurrence of a leak at an inspection location of the inspection target.

## Claims

1. An end effector that grips a probe to bring the probe into contact with an inspection target, the end effector comprising:
an elastic member that allows displacement of the probe by being compressed by a force that is applied from the inspection target to the probe.

2. The end effector according to Claim 1,
wherein the elastic member includes a first elastic member and a second elastic member,
the end effector further comprises a rotating member,
the rotating member is configured to be rotatable integrally with the probe around an axis of rotation,
the first elastic member is configured to apply an elastic force to one of a pair of end portions of the rotating member that extends to both sides from the axis of rotation, and
the second elastic member is configured to apply an elastic force to the other of the pair of end portions of the rotating member that extends to both sides from the axis of rotation.

3. The end effector according to Claim 2,
wherein the rotating member is a first rotating member,
the end effector further comprises a second rotating member,
the second rotating member is configured to be rotatable integrally with the probe around an axis of rotation orthogonal to an axis of rotation of the first rotating member,
the elastic member includes a third elastic member and a fourth elastic member,
the third elastic member is configured to apply an elastic force to one of a pair of end portions of the second rotating member that extends to both sides in a rotation direction with respect to the axis of rotation of the second rotating member, and
the fourth elastic member is configured to apply an elastic force to the other of the pair of end portions of the second rotating member that extends to both sides in the rotation direction with respect to the axis of rotation of the second rotating member.

4. The end effector according to Claim 1,
wherein the elastic member is a spring.

5. The end effector according to Claim 1, further comprising:
an adjustment device that adjusts an elastic force of the elastic member with respect to a compression amount of the elastic member.

6. A flaw detection system comprising:
the end effector according to Claim 1;
a robot arm to which the end effector is attached; and
a control device,
wherein the control device is configured to execute processing of displacing the probe along the inspection target by operating the robot arm while performing force control.

7. A method for inspecting an inspection target using the end effector according to Claim 1, in which the end effector is attached to a robot arm, the method comprising:
a step of inspecting the inspection target by sampling a reflected wave of an ultrasonic wave transmitted while displacing the probe along the inspection target by operating the robot arm;
a step of changing at least one of a force of pressing the probe against the inspection target by the robot arm and a displacement speed of the probe in a case where abnormality occurs in the sampling of the reflected wave; and
a step of resuming the inspection from a point to which the probe is retracted by a predetermined amount with respect to a position of the probe before the abnormality occurs, after the change is made.

8. A method for inspecting an inspection target using the end effector according to Claim 5, in which the end effector is attached to a robot arm, the method comprising:
a step of inspecting the inspection target by sampling a reflected wave of an ultrasonic wave transmitted while displacing the probe along the inspection target by operating the robot arm;
a step of changing an elastic force of the elastic member in a case where abnormality occurs in the sampling of the reflected wave; and
a step of resuming the inspection from a point to which the probe is retracted by a predetermined amount with respect to a position of the probe before the abnormality occurs, after the change is made.
